# EUROPÄISCHE PATENTSCHRIFT

(11) **EP 3 122 795 B1**
(45) Veröffentlichungstag und Bekanntmachung des Hinweises auf die Patenterteilung: **15.06.2022**
(21) Anmeldenummer: 15711793.8
(22) Anmeldetag: 25.03.2015
(51) Int. Cl.: C08G 18/48, C08G 18/66, C08G 18/76, C08K 5/00, C08K 5/13, C08G 18/24, C08G 18/32, F16L 11/00, C08G 18/42, C08G 18/44

(54) **TPU PNEUMATIKSCHLAUCH**
TPU PNEUMATIC TUBE
TUYAU FLEXIBLE PNEUMATIQUE EN TPU

(30) Priorität: 25.03.2014 EP 14161471
(43) Veröffentlichungstag der Anmeldung: 01.02.2017
(60) Teilanmeldung: 21164935.5
(73) Patentinhaber: BASF SE, 67056 Ludwigshafen am Rhein (DE)
(72) Erfinder: PÖSELT, Elmar, 22359 Hamburg (DE); NITSCHKE, Dieter, 49448 Quernheim (DE); LAHRMANN, Birte, 49451 Holdorf (DE); KEMPFERT, Dirk, 32351 Stemwede-Dielingen (DE)
(74) Vertreter: BASF IP Association
(86) Internationale Anmeldenummer: PCT/EP2015/056414
(87) Internationale Veröffentlichungsnummer: WO 2015/144765

(56) Entgegenhaltungen:
- EP-A1- 0 914 504
- WO-A1-2015/000722
- US-A1- 2002 052 461
- US-A1- 2002 052 461
- US-A1- 2005 261 447
- US-A1- 2009 069 526
- US-A1- 2009 104 449
- US-A1- 2009 189 314
- US-A1- 2010 152 405
- US-A1- 2010 239 803
- US-A1- 2012 083 187

## Beschreibung

Die vorliegende Erfindung betrifft ein thermoplastisches Polyurethan erhältlich oder erhalten durch Umsetzung von mindestens einer Polyisocyanatzusammensetzung, 1,3-Propandiol als Kettenverlängerer und einer Polyolzusammensetzung, wobei die Polyolzusammensetzung mindestens Polytetrahydrofuran (PTHF) enthält und die Polyisocyanatzusammensetzung mindestens Methylendiphenyldiisocyanat (MDI) enthält. Weiter betrifft die vorliegende Erfindung ein Verfahren zur Herstellung derartiger thermoplastischer Polyurethane, sowie die Verwendung derartiger Polyurethane zur Herstellung von Spritzgussprodukten, Extrusionsprodukten, Folien und Formkörpern.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Beispielsweise WO 2006/082183 A1 offenbart ein Verfahren zur kontinuierlichen Herstellung thermoplastisch verarbeitbarer Polyurethan-Elastomeren, bei dem ein Polyisocyanat, eine Verbindung mit zerevitinoffaktiven Wasserstoffatomen mit einem mittleren Molekulargewicht von 450 g/Mol bis 5.000 g/Mol, ein Kettenverlängerer sowie weitere Hilfs- und Zusatzstoffe umgesetzt werden. Dabei werden durch eine spezielle Verarbeitung spezielle Eigenschaftsprofile erreicht.

Auch EP 0 922 552 A1 offenbart ein Verfahren zur kontinuierlichen Herstellung von Granulat aus thermoplastischen Polyurethan-Elastomeren, wobei zunächst durch Umsetzung von organischen Diisocyanaten, difunktionellen Polyhydroxylverbindungen mit Molekulargewichten von 500 bis 8000 und difunktionellen Kettenverlängerungsmitteln mit Molekulargewichten von 60 bis 400 in Gegenwart von Katalysatoren sowie gegebenenfalls Hilfsmittel und/oder Zusatzstoffen ein Granulat hergestellt wird. Die Verwendung zur Herstellung von Extrusions-, Spritzguss- oder Kalanderware, insbesondere von Kabelummantelungen, Schläuchen und/oder Folien wird ebenfalls offenbart.

EP 0 959 104 A1 offenbart Mischungen enthaltend ein thermoplastisches Polyurethan mit einer Shore-Härte von 60 A bis 50 D und Ethylen-Propylen-(EPM)-Kautschuke und/oder modifizierten Ethylen-Propylen-(EPM)-Kautschuke, die ebenfalls zur Herstellung von Schläuchen eingesetzt werden.

WO 98/56845 offenbart ein thermoplastisches Polymer, das durch Umsetzung eines Polyisocyanats, einem Glycol als Kettenverlängerer und einem Polyetherpolyol erhalten wird. Es werden verschiedene Isocyanate, Kettenverlängerer und Polyole offenbart.

In der US 2012/083187 A1 und US 2009/069526A1 werden thermoplastische Polyurethane für die Herstellung von Schläuchen offenbart, die auf Polytetrahydrofuranen und Methylendiphenyldiisocyanat basieren. Dabei werden auch Propandiol enthaltende Mischungen verschiedener Kettenverlängerer eingesetzt.

US 2010/239803 A1 offenbart Polyester basierte thermoplastische Polyurethane, wobei auch Propandiol als Kettenverlängerer offenbart wird.

Auch in der US 2009/189314 A1 werden thermoplastische Polyurethane offenbart, die unter Verwendung von Propandiol als Kettenverlängerer hergestellt werden.

US 2002/052461 A1 offenbart ausweislich der Beispiele ein TPU und ein Verfahren zu dessen Herstellung aus MDI, PTMO und ausschließlich 1,3-Propandiol als Kettenverlängerer, wobei ein Polyol mit einem Molekulargewicht von 2000 g/mol eingesetzt wird.

US 2005/261447 A1 offenbart ausweislich der Beispiele ein TPU und ein Verfahren zu dessen Herstellung aus MDI, PTMG und ausschließlich 1,3-Propandiol als Kettenverlängerer, wobei das eingesetzte Polyol ein Molekulargewicht von 1700 g/mol aufweist.

EP 0 914504A1 offenbart ausweislich der Beispiele ein TPU und ein Verfahren zu dessen Herstellung aus MDI, PTMEG und ausschließlich 1,3-Propandiol als Kettenverlängerer, wobei das Molekulargewicht des eingesetzten Polyols bei 2500 g/mol.

Abhängig von der Art der Anwendung können die Eigenschaften des thermoplastischen Polyurethans durch die Art der Einsatzstoffe und die eingesetzten Mengenverhältnisse variiert werden. Beispielsweise für die Anwendung als Schlauchmaterial, insbesondere für Pneumatikschläuche, ist ein hoher Berstdruck auch bei erhöhten Temperaturen nötig. Beispielsweise durch Variation der Polyolkomponente kann die Stabilität beeinflusst werden. Auch durch die Verarbeitung, beispielsweise durch Tempern, kann die Stabilität beeinflusst werden. Zudem sind bestehende Ester-Varianten, die einen Berstdruck bei 70 °C von größer als 20 bar zeigen, opak bis transluzent und somit für viele Anwendungen nicht geeignet.

Für verschieden Anwendungen, beispielsweise für den Einsatz als Kabelummantellung ist zudem eine hohe Wärmeformbeständigkeit des eingesetzten thermoplastischen Polyurethans vorteilhaft. Ein Maß für die Wärmeformbeständigkeit ist beispielsweise die mittels TMA ermittelte Onset Temperatur.

Ein weiteres Problem, das insbesondere bei aus dem Stand der Technik bekannten transparenten Schläuchen auftritt, ist ein Aufblähen der Schläuche bei Druckbeanspruchung vor dem Bersten. Dies führt zu einer Verminderung der Übertragungsfrequenz pneumatischer Signale und geht häufig mit einem unerwünschten Aufreißen der Schläuche über lange Bereiche einher.

Ausgehend vom Stand der Technik lag eine der vorliegenden Erfindung zugrundeliegende Aufgabe demgemäß darin, verbesserte Materialien bereitzustellen, die auch bei erhöhten Temperaturen einen guten Berstdruck bei der Anwendung zur Herstellung von Schläuchen zeigen. Eine weitere der vorliegenden Erfindung zugrundeliegende Aufgabe war es, Materialien mit hoher Wärmeformbeständigkeit bereitzustellen.

Erfindungsgemäß wird dieser Aufgabe gelöst durch ein thermoplastisches Polyurethan erhältlich oder erhalten durch Umsetzung von mindestens den Komponenten (i) bis (iii):
(i) ein Polyisocyanatzusammensetzung;
(ii) 1,3-Propandiol als Kettenverlängerer;
(iii) eine Polyolzusammensetzung,

wobei neben 1,3-Propandiol kein weiterer Kettenverlängerer eingesetzt wird, und
wobei die Polyolzusammensetzung mindestens Polytetrahydrofuran enthält, und die Polyisocyanatzusammensetzung mindestens Methylendiphenyldiisocyanat (MDI) enthält,
wobei das Polytetrahydrofuran ein Molekulargewicht Mn im Bereich von 650 g/mol bis 1400 g/mol aufweist.

Überraschenderweise wurde gefunden, dass durch die Verwendung von 1,3-Propandiol als einzigem Kettenverlängerer in Kombination mit einer definierten Polyisocyanatzusammensetzung und einer definierten Polyolzusammensetzung, ein thermoplastisches Polyurethan erhalten wird, das ein gutes Berstdruckverhalten und eine hohe Wärmeformbeständigkeit aufweist, und bevorzugt auch transparent ist. Überraschenderweise wurde gefunden, dass durch die Verwendung von 1,3-Propandiol als Kettenverlängerer besonders in Kombination mit der definierten Polyisocyanatzusammensetzung und der Polyolzusammensetzung ein Schlauch hergestellt werden konnte, der bei 70 °C einen Berstdruck von größer als 20 bar aufweist, und bevorzugt auch transparent ist. Darüber hinaus zeigen die Schläuche ein im Wesentlichen punktuelles Berstverhalten.

Erfindungsgemäß wird das thermoplastische Polyurethan erhalten oder ist erhältlich durch Umsetzung der Komponenten (i) bis (iii). Dabei werden eine Polyisocyanatzusammensetzung, eine Polyolzusammensetzung und 1,3-Propandiol als Kettenverlängerer umgesetzt. Erfindungsgemäß wird neben 1,3-Propandiol kein weiterer Kettenverlängerer eingesetzt.

Der Anteil des eingesetzten 1,3-Propandiols an der Menge an eingesetztem Kettenverlängerer ist somit 100 Mol%.

Erfindungsgemäß werden eine Polyisocyanatzusammensetzung, die mindestens Methylendiphenyldiisocyanat (MDI) enthält, eine Polyolzusammensetzung, die mindestens Polytetrahydrofuran (PTHF) enthält, und 1,3-Propandiol als Kettenverlängerer umgesetzt.

Die eingesetzte Polyolzusammensetzung enthält im Rahmen der vorliegenden Erfindung mindestens ein Polyol. Die Polyolzusammensetzung kann auch zwei oder mehr Polyole enthalten. Erfindungsgemäß enthält die Polyolzusammensetzung mindestens ein Polytetrahydrofuran, wobei das Polytetrahydrofuran ein Molekulargewicht Mn im Bereich von 650 g/mol bis 1400 g/mol aufweist.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegt vorzugsweise zwischen 0,5×10³g/mol und 8 ×10³ g/mol, bevorzugt zwischen 0,6 ×10³ g/mol und 5 ×10³ g/mol, insbesondere zwischen 0,8 ×10³ g/mol und 3 ×10³ g/mol.

Erfindungsgemäß sind Polyether geeignet, aber auch Polyester, Blockcopolymere sowie Hybrid Polyole wie z.B. Poly(ester/amid). Bevorzugte Polyetherole sind erfindungsgemäß Polyethylenglykole, Polypropylenglykole, Polyadipate, Polycarbonat(diol)e und Polycaprolacton.

Demgemäß betrifft die vorliegende Erfindung gemäß einer weiteren Ausführungsform ein thermoplastisches Polyurethan wie zuvor beschrieben, wobei die eingesetzte Polyolzusammensetzung mindestens ein Polytetrahydrofuran enthält und mindestens ein Polyol ausgewählt aus der Gruppe bestehend aus Polyethylenglykol, Polypropylenglykol, Polyadipaten, Polycarbonat(diol)en und Polycaprolactonen enthält.

Gemäß einer besonders bevorzugten Ausführungsform weist das eingesetzte Polyol ein Molekulargewicht Mn im Bereich von 500 g/mol bis 4000 g/mol auf, bevorzugt im Bereich von 800 g/mol bis 3000 g/mol.

Demgemäß betrifft die vorliegende Erfindung gemäß einer weiteren Ausführungsform ein thermoplastisches Polyurethan wie zuvor beschrieben, wobei mindestens ein in der Polyolzusammensetzung enthaltenes Polyol ein Molekulargewicht Mn im Bereich von 500 g/mol bis 4000 g/mol aufweist.

Erfindungsgemäß können auch Mischungen verschiedener Polyole eingesetzt werden. Bevorzugt haben die eingesetzten Polyole bzw. die Polyolzusammensetzung eine mittlerer Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß wird zur Herstellung des thermoplastischen Polyurethans mindestens eine Polyolzusammensetzung als Komponente (iii) eingesetzt, die mindestens Polytetrahydrofuran enthält, wobei das Polytetrahydrofuran ein Molekulargewicht Mn im Bereich von 650 g/mol bis 1400 g/mol aufweist. Erfindungsgemäß kann die Polyolzusammensetzung neben Polytetrahydrofuran auch weitere Polyole enthalten.

Erfindungsgemäß sind beispielsweise weitere Polyether geeignet, aber auch Polyester, Blockcopolymere sowie Hybrid Polyole wie z.B. Poly(ester/amid). Bevorzugte Polyetherole sind erfindungsgemäß Polyethyleneglykole, Polypropylenglykole und Polycaprolacton.

Demgemäß betrifft die vorliegende Erfindung gemäß einer weiteren Ausführungsform ein thermoplastisches Polyurethan wie zuvor beschrieben, wobei die Polyolzusammensetzung mindestens ein Polytetrahydrofuran und mindestens ein weiteres Polyol ausgewählt aus der Gruppe bestehend aus Polyethylenglykol, Polypropylenglykol und Polycaprolacton enthält.

Gemäß einer besonders bevorzugten Ausführungsform weist das Polytetrahydrofuran ein Molekulargewicht Mn im Bereich von 750 g/mol bis 1400 g/mol auf.

Die Zusammensetzung der Polyolzusammensetzung kann im Rahmen der vorliegenden Erfindung in weiten Bereichen variieren. Beispielsweise kann der Gehalt an Polytetrahydrofuran im Bereich von 15 % bis 85 % liegen, bevorzugt im Bereich von 20 % bis 80 %, weiter bevorzugt im Bereich von 25 % bis 75 %.

Erfindungsgemäß kann die Polyolzusammensetzung auch ein Lösungsmittel enthalten. Geeignete Lösungsmittel sind dem Fachmann an sich bekannt.

Erfindungsgemäß liegt das Molekulargewicht Mn des Polytetrahydrofurans im Bereich von 650 bis 1400 g/mol. Weiter bevorzugt liegt das Molekulargewicht Mn des Polytetrahydrofurans im Bereich von 750 bis 1400 g/mol.

Insbesondere bei der Verwendung eines Polytetrahydrofurans mit einem Molekulargewicht Mn im Bereich von 650 g/mol bis 1400 g/mol werden gute Materialeigenschaften bzw. ein gutes Eigenschaftsprofil für die Anwendung als Pneumatikschlauch erhalten.

Erfindungsgemäß wird 1,3-Propandiol als Kettenverlängerer alleine eingesetzt.

Erfindungsgemäß wird 1,3-Propandiol als Kettenverlängerer alleine eingesetzt, d.h. auch die Polyolzusammensetzung ist frei von weiteren Kettenverlängerern, beispielsweise frei von kurzkettigen Diaminen oder Diolen wie Diolen mit einem Molekulargewicht Mw < 220 g/mol.

Im Rahmen der vorliegenden Erfindung kann die eingesetzte Menge des Kettenverlängerers und der Polyolzusammensetzung in weiten Bereichen variieren. Beispielsweise werden die Komponente (iii) und die Komponente (ii) in einem molaren Verhältnis von (iii) zu (ii) von 1 zu 0,7, 1 zu 2,7 und 1 zu 7,3 eingesetzt.

Erfindungsgemäß wird zur Herstellung des thermoplastischen Polyurethans eine Polyisocyanatzusammensetzung eingesetzt. Die Polyisocyanatzusammensetzung enthält dabei mindestens Methylendiphenyldiisocyanat (MDI als Polyisocyanat. Erfindungsgemäß kann die Polyisocyanatzusammensetzung auch zwei oder mehr Polyisocyanate enthalten. Im Rahmen der vorliegenden Erfindung wird zur Herstellung des thermoplastischen Polyurethans eine Polyisocyanatzusammensetzung eingesetzt, die mindestens Methylendiphenyldiisocyanat (MDI) enthält.

Dabei wird erfindungsgemäß unter dem Begriff Methylendiphenyldiisocyanat 2,2'-, 2,4'-und/oder 4,4'-Diphenylmethandiisocyanat verstanden oder ein Gemisch aus zwei oder drei Isomeren. Somit kann erfindungsgemäß 2,2'-, 2,4'- und/oder 4,4'-Diphenylmethandiisocyanat eingesetzt werden oder ein Gemisch aus zwei oder drei Isomeren. Erfindungsgemäß kann die Polyisocyanatzusammensetzung auch weitere Polyisocyanate enthalten. Erfindungsgemäß ist es somit auch möglich, dass die Isocyanatzusammensetzung Methylendiphenyldiisocyanat und mindestens ein weiteres Polyisocyanat enthält. Erfindungsgemäß ist es jedoch auch möglich, dass die Isocyanatzusammensetzung nur Methylendiphenyldiisocyanat enthält.

Bevorzugte weitere Polyisocyanate sind im Rahmen der vorliegenden Erfindung Diisocyanate, insbesondere aliphatische oder aromatische Diisocyanate, weiter bevorzugt aromatische Diisocyanate.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trime-thylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H 12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 1,5-Naphthylendiisocyanat (NDI), 2,4-und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Weiter können im Rahmen der vorliegenden Erfindung auch Vernetzer eingesetzt werden, beispielsweise die zuvor genannten höherfunktionellen Polyisocyanate oder Polyole oder auch andere höherfunktionale Moleküle mit mehreren gegenüber Isocyanaten reaktiven funktionellen Gruppen.

Erfindungsgemäß werden die Komponenten (i) bis (iii) in einem Verhältnis eingesetzt, so dass das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,05, besonders bevorzugt im Bereich von 1 zu 0,98 bis 1 zu 1,03.

Gemäß einer weiteren Ausführungsform betrifft die vorliegende Erfindung ein thermoplastisches Polyurethan wie zuvor beschrieben, wobei das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt.

Eine weitere Größe, die bei der Umsetzung der Komponenten (i) bis (iii) berücksichtigt wird, ist die Isocyanat-Kennzahl. Hierbei ist die Kennzahl definiert durch das Verhältnis der insgesamt bei der Umsetzung eingesetzten Isocyanatgruppen der Komponente (i) zu den Isocyanat-reaktiven Gruppen, also insbesondere den Gruppen der Komponenten (ii) und (iii). Bei einer Kennzahl von 1000 kommt auf eine Isocyanatgruppe der Komponente (i) ein aktives Wasserstoffatom. Bei Kennzahlen über 1000 liegen mehr Isocyanatgruppen als Isocyanat-reaktiven Gruppen vor. Bevorzugt liegt die Kennzahl bei der Umsetzung der Komponenten (i) bis (iii) im Bereich von 965 bis 1110, beispielsweise im Bereich von 970 bis 1110, weiter bevorzugt im Bereich von 970 bis 1050, besonders bevorzugt im Bereich von 980 bis 1030.

Gemäß einer weiteren Ausführungsform betrifft die vorliegende Erfindung ein thermoplastisches Polyurethan wie zuvor beschrieben, wobei die Kennzahl bei der Umsetzung im Bereich von 965 bis 1100 liegt.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff Additiv insbesondere Katalysatoren, Hilfsstoffe und Zusatzstoffe verstanden, insbesondere Stabilisatoren, Nukleationsmittel, Füllstoffe oder Vernetzer.

Geeignete Additive bzw. Zusatzstoffe sind beispielsweise Stabilisatoren, Nukleationsmittel, Füllstoffe wie z.B. Silikate oder Vernetzer wie z.B. mehrfunktionale Alumosilikate.

Gemäß einer weiteren Ausführungsform betrifft die vorliegende Erfindung demgemäß ein thermoplastisches Polyurethan wie zuvor beschrieben, wobei das thermoplastische Polyurethan mindestens ein Additiv enthält.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungenoder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Die Eigenschaften der erfindungsgemäßen thermoplastischen Polyurethane können je nach Anwendung in weiten Bereichen variieren. Die erfindungsgemäßen thermoplastischen Polyurethane weisen beispielweise eine Shore Härte im Bereich von 60 A bis 80 D auf, bestimmt gemäß DIN 53505, bevorzugt im Bereich von 80 A bis 60 D, bestimmt gemäß DIN 53505, weiter bevorzugt im Bereich von 95 A bis 58 D, bestimmt gemäß DIN 53505.

Gemäß einer weiteren Ausführungsform betrifft die vorliegende Erfindung ein thermoplastisches Polyurethan wie zuvor beschrieben, wobei das thermoplastische Polyurethan eine Shore Härte im Bereich von 60 A bis 80 D aufweist, bestimmt gemäß DIN 53505.

Wie ausgeführt sind auch die optischen Eigenschaften der erfindungsgemäßen thermoplastischen Polyurethane vorteilhaft. So sind die thermoplastischen Polyurethane im Rahmen der vorliegenden Erfindung bevorzugt transluzent, weiter bevorzugt transparent. Dies ist für viele Anwendungen vorteilhaft.

Gemäß einer weiteren Ausführungsform betrifft die vorliegende Erfindung ein thermoplastisches Polyurethan wie zuvor beschrieben, wobei das thermoplastische Polyurethan transluzent bis transparent ist.

Gemäß einer alternativen Ausführungsform betrifft die vorliegende Erfindung auch ein thermoplastisches Polyurethan wie zuvor beschrieben, wobei das thermoplastische Polyurethan opak ist.

Gemäß einem weiteren Aspekt betrifft die vorliegende Erfindung auch ein Verfahren zur Herstellung eines thermoplastischen Polyurethans, umfassend die Umsetzung der Komponenten (i) bis (iii):
(i) einer Polyisocyanatzusammensetzung;
(ii) 1,3-Propandiol als Kettenverlängerer;
(iii) einer Polyolzusammensetzung,

wobei neben 1,3-Propandiol kein weiterer Kettenverlängerer eingesetzt wird, und
wobei die Polyolzusammensetzung mindestens Polytetrahydrofuran enthält, und die Polyisocyanatzusammensetzung mindestens Methylendiphenyldiisocyanat (MDI) enthält,
wobei das Polytetrahydrofuran ein Molekulargewicht Mn im Bereich von 650 g/mol bis 1400 g/mol aufweist.

Bezüglich bevorzugter Ausführungsformen des Verfahrens, geeigneter Einsatzstoffe oder Mischungsverhältnisse wird auf die obigen Ausführungen verwiesen, die entsprechend gelten.

Die Umsetzung der Komponenten (i) bis (iii) kann prinzipiell unter an sich bekannten Reaktionsbedingungen durchgeführt werden. Die Umsetzung kann dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1

Gemäß einer bevorzugten Ausführungsform wird die Umsetzung der Komponenten (i) bis (iii) unter erhöhten Temperaturen als Raumtemperatur durchgeführt.

Das Erwärmen kann erfindungsgemäß auf jede dem Fachmann bekannte geeignete Art erfolgen.

Dabei wird beispielsweise bei einer Umsetzung mittels Reaktionsextrusionsverfahren die Reaktion derart geführt, dass die Zonentemperatur im Bereich von 170 °C bis 245 °C liegt, bevorzugt im Bereich von 180 °C bis 235 °C, weiter bevorzugt im Bereich von 190 °C bis 230 °C.

Demgemäß betrifft die vorliegende Erfindung gemäß einer weiteren Ausführungsform auch ein Verfahren zur Herstellung eines thermoplastischen Polyurethans wie zuvor beschrieben, wobei die Umsetzung mittels eines Reaktionsextrusionsverfahrens erfolgt und die Zonentemperatur im Bereich von 170 °C bis 245 °C liegt.

Erfindungsgemäß ist es auch möglich, dass das Verfahren weitere Schritte umfasst, beispielsweise eine Vorbehandlung der Komponenten oder eine Nachbehandlung des erhaltenen thermoplastischen Polyurethans. Demgemäß betrifft die vorliegende Erfindung gemäß einer weiteren Ausführungsform auch ein Verfahren zur Herstellung eines thermoplastischen Polyurethans wie zuvor beschrieben, wobei nach der Umsetzung das erhaltene thermoplastische Polyurethan getempert wird.

Das erfindungsgemäße thermoplastische Polyurethan bzw. ein nach einem erfindungsgemäßen Verfahren erhaltenes oder erhältliches thermoplastisches Polyurethan kann vielseitig verwendet werden. Insbesondere sind die erfindungsgemäßen thermoplastischen Polyurethane für die Herstellung von Formteilen und Folien geeignet, weiter bevorzugt für die Herstellung von Schläuchen.

Weiter betrifft die vorliegende Erfindung daher auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Spritzgussprodukten, Extrusionsprodukten, Folien, und Formkörpern. Gemäß einer weiteren Ausführungsform betrifft die vorliegende Erfindung die Verwendung wie zuvor beschrieben, wobei der Formkörper ein Schlauch ist. Hier ist der hohe Berstdruck der erfindungsgemäßen thermoplastischen Polyurethane vorteilhaft.

Die vorliegende Erfindung betrifft auch die durch ein erfindungsgemäßes Verfahren erhaltenen Spritzgussprodukte, Extrusionsprodukte, Folien oder Formkörper, beispielsweise Schläuche Kabelummantellungen oder Förderbänder.

Dabei ist es im Rahmen der vorliegenden Erfindung auch möglich, dass die erhaltenen Spritzgussprodukte, Extrusionsprodukte, Folien oder Formkörper einer Nachbehandlung unterzogen werden.

Weiter betrifft die vorliegende Erfindung einen Schlauch, umfassend ein thermoplastischen Polyurethans wie zuvor beschrieben oder eines thermoplastischen Polyurethans erhältlich oder erhalten nach einem wie zuvor beschriebenen Verfahren.

Dabei kann der Schlauch weitere Bestandteile aufweisen. Insbesondere kann der Schlauch mehrlagig sein und mittels üblicher Maßnahmen verstärkt werden. Geeignet zur Verstärkung sind beispielsweise Fasern oder Gewebe, beispielsweise solche aus Glas, Textilien oder Metallen.

Gemäß einer weiteren Ausführungsform betrifft die vorliegende Erfindung demgemäß einen Schlauch wie zuvor beschrieben, wobei der Schlauch mehrlagig aufgebaut ist.

Gemäß einer weiteren Ausführungsform betrifft die vorliegende Erfindung demgemäß einen Schlauch wie zuvor beschrieben, wobei der Schlauch durch Fasern oder Geweben verstärkt ist.

Im Rahmen der vorliegenden Erfindung ist es weiter möglich, dass bei der Herstellung eines erfindungsgemäßen Formkörpers, insbesondere einer Folie oder eines Schlauchs, Farbpigmente oder flüssige organische Farbstoffe zugesetzt werden.

Weiter ist es im Rahmen der vorliegenden Erfindung möglich, dass der Formkörper, beispielsweise die Folie oder der Schlauch einer Nachbehandlung, beispielsweise einer Vernetzung unterzogen wird. Gemäß einer weiteren Ausführungsform betrifft die vorliegende Erfindung demgemäß eine Folie oder einen Schlauch wie zuvor beschrieben, wobei die Folie bzw. der Schlauch einer Nachbehandlung unterzogen wurde.

Wie auch die Beispiele belegen, kann mit einem erfindungsgemäßen thermoplastischen Polyurethan eine Schlauch erhalten werden, der für Pneumatikanwendungen einsetzbar ist und nach Temperung bei den Maßen 5,8 * 8,2 mm bei einer Shore Härte von 98A einen Berstdruck bei 70 °C von größer als 20 bar aufweist.

Weitere bevorzugte Anwendungen sind als Kabelummantelungen oder auch für die Herstellung von Förderbändern. Die hohe Wärmeformbeständigkeit der erfindungsgemäßen thermoplastischen Polyurethane ist für die Anwendung als Kabelummantellung vorteilhaft. Dabei wird die Wärmeformbeständigkeit im Rahmen der vorliegenden Erfindung mittels der TMA Onset Temperatur bestimmt.

Weitere Ausführungsformen der vorliegenden Erfindung sind den Ansprüchen und den Beispielen zu entnehmen.

Die nachfolgenden Beispiele dienen der Veranschaulichung der Erfindung.

### BEISPIELE

### 1. Herstellbeispiel I

Folgende Einsatzstoffe wurden eingesetzt:
- Polyol 1:: Polyetherpolyol mit einer OH- Zahl von 112,2 und ausschließlich primären OH- Gruppen (basierend auf Tetramethylenoxid, Funktionalität: 2)
- Isocyanat 1:: aromatisches Isocyanat (4,4' Methylendiphenyldiisocyanat)
- KV 1:: 1,3- Propandiol
- KV 2:: 1,4- Butandiol
- Katalysator 1:: Zinn-II-isooctoat (50 %ig in Dioktyladipat)
- Stabilisator 1:: Sterisch gehindertes Phenol

### 1.1 Beispiel für diskontinuierliche Synthese:

Ein thermoplastisches Polyurethan (TPU) wurde aus 4,4'-Diphenylmethandiisocyanat, Kettenverlängerer 1,3-Propandiol, phenolischen Antioxidanz, und Polytetrahydrofuran mit einer zahlenmittleren Molmasse von 1 kg/mol unter Rühren in einem Reaktionsgefäß synthetisiert. Die Starttemperatur betrug 80 °C. Nach Erreichen einer Reaktionstemperatur von 110 °C wurde die Lösung auf eine auf 125 °C temperierte Heizplatte ausgegossen und die erhaltende TPU-Platte nach Temperung granuliert. Die Messwerte wurden von Spritzgussplatten bzw. von Schläuchen erstellt, wobei die Zonentemperaturen der verwendeten Extruder zwischen 190 °C und 235 °C lagen.

Die Synthese und Eigenschaften von erhaltenen thermoplastischen Polyurethanen sind in Tabelle 1 und 2 zusammengefasst.

Für Beispiel 3 wird bei einer Starttemperatur von 60 °C, wird bei Erreichen einer Temperatur von 80 °C die Mischung auf eine auf 80 °C temperierte Heizplatte ausgegossen.

Die unter Verwendung von 1,4-Butandiol als Kettenverlängerer hergestellten Produkte dienen als Vergleichsbeispiele.

**Tabelle 1: Beispiele zu Synthese:**

| | Beispiel 1 | Beispiel 2 | Beispiel 3 | Beispiel 4* |
|---|---|---|---|---|
| Polyol 1 [g] | 750 | 750 | 700 | 750 |
| Isocyanat 1 [g] | 690 | 690 | 646,3 | 690 |
| KV 1 [g] | 154,16 | 155,9 | 142,3 | |
| KV 2 [g] | | | | 180,1 |
| Stabilisator 1 [g] | 16,1 | | | |
| Kennzahl | 990 | 985 | 1000 | 1000 |

| | | | | |
|---|---|---|---|---|
| * Vergleichsbeispiel | | | | |

**Tabelle 2: Beispiele zu Eigenschaften:**

| | Beispiel 1 | Beispiel 2 | Beispiel 3 | Beispiel 4* |
|---|---|---|---|---|
| Shore D | 57 | 56 | 56 | 56 |
| E-Modul [MPa] | 64 | | | |
| Zugfestigkeit [MPa] | 45 | 37 | 40 | 53 |
| Reißdehnung [%] | 490 | 470 | 520 | 420 |
| Weiterreißwiderstand [kN/m] | 128 | 122 | 131 | 113 |
| Druckverformungsrest (72h/23°C/30min) [%] | 21 | 25 | 25 | 21 |
| Druckverformungsrest (24h/70°C/30min) [%] | 44 | 45 | 49 | 35 |
| Druckverformungsrest (24h/100°C/30min) [%] | 69 | 66 | 76 | 54 |
| Abrieb [mm³] | 36 | 49 | 33 | 36 |
| Berstdruck ungetemperter 5,8 * 8,2 mm Schläuche bei 23 °C [bar] | 34,1 | 32,4 | 37,1 | 2,4 |
| Berstdruck ungetemperter 5,8 * 8,2 mm Schläuche bei 70 °C [bar] | 19,3 | 19,6 | 20,6 | 12,1 |
| Berstdruck getemperter 5,8 * 8,2 mm Schläuche bei 23 °C [bar] | 38,8 | 32,8 | 41,8 | 27,5 |
| Berstdruck getemperter 5,8 * 8,2 mm Schläuche bei 70 °C [bar] | 23,1 | 21,2 | 30,8 | 14,7 |

| | | | | |
|---|---|---|---|---|
| * Vergleichsbeispiel | | | | |

### 1.2 Beispiel für kontinuierliche Synthese

### 1.2.1 Bandverfahren:

Eine Mischung aus Kettenverlängerer 1,3-Propandiol, eines phenolischen Antioxidanz, und Polytetrahydrofuran mit einer zahlenmittleren Molmasse von 1 kg/mol wurde auf 70 °C erwärmt und in einem Mischkopf mit 4,4'-Diphenylmethandiisocyanat intensiv gemischt. Das erhaltene Reaktionsgemisch wurde mit einer Temperatur von 90 °C auf ein umlaufendes PTFE-Band aufgebracht. Die am Ende des Bandes zu einer festen Bandware (Schwarte) erstarrte Reaktionsmischung wurde mit ca. 80 °C über Einzugswalzen kontinuierlich direkt einer Zerkleinerungs- und Homogenisierungsvorrichtung zugeführt. Dort wurde es bei Temperaturen von ca. 105 °C zerkleinert und in einen tangentialen angeflanschten Einwellenextruder gefördert. Die Gehäusetemperaturen lagen im Einzugsbereich bei etwa 170 °C bis 190 °C, in der Mittelzone bei 210 bis 230 °C. Die an der Düsenplatte austretenden Schmelze wurde mit einer Unterwassergranulierung zu gleichmäßigem Linsengranulat konfektioniert und anschließend getrocknet.

### 1.2.2 Reaktionsextrusionsverfahren:

In das erste Gehäuse eines Zweiwellenextruders Typ ZSK 92 der Firma Werner & Pfleiderer, Stuttgart mit einer Verfahrenslänge von 56 D wurde eine Mischung aus dem Kettenverlängerer 1,3-Propandiol, eines phenolischen Antioxidanz und Polytetrahydrofuran und eines Katalysators mit einer Vorlagetemperatur von 150 °C einerseits sowie getrennt hiervon das 4,4'-Diphenylmethandiisocyanat mit einer Vorlagetemperatur von 65 °C in das erste Gehäuse desselben dosiert. Die Drehzahl der Doppelschnecke betrug 280 min⁻¹. Die Temperatureinstellwerte der Gehäuse lagen in Stromabrichtung im ersten Schneckendrittel bei 200 °C, im zweiten Schneckendrittel bei 170 °C und im dritten und letzten Schneckendrittel bei 190 °C. Der Ausstoß betrug 850 kg/h. Nach dem Schmelzeabschlag durch Unterwassergranulierung und integrierter zentrifugaler Trocknung wurde das Granulat bei ca. 80 bis 90 °C endgetrocknet.

Das Granulat wurde anschließend durch Spritzgießen zu Prüfkörpern bzw. durch Extrusion zu Schläuchen weiterverarbeitet. Die Schläuche wurden durch Extrusion auf einem 45er Arenz Extruder mit 3-Zonenschnecke mit 9.8 mm Düse und einem Dorn von 6,9 mm gefahren. Die Zonentemperaturen lagen zwischen 180 und 225 °C. Die Einstellung der Schlauchgeometrie erfolgte durch Variation der Abzugsgeschwindigkeit und Drucks im Wasserbad mit Vakuumkalibrierung.

Die Synthese und Eigenschaften von thermoplastischen Polyurethanen, die durch kontinuierliche Synthese hergestellt wurden, sind in Tabelle 3 und Tabelle 4 zusammengefasst.

**Tabelle 3: Beispiele zu Synthese:**

| | Beispiel 5 | Beispiel 6 | Beispiel 7 | Beispiel 8 |
|---|---|---|---|---|
| Polyol 1 [g] | 1000 | 750 | 750 | 750 |
| Isocyanat 1 [g] | 920 | 690 | 690 | 690 |
| KV 1 [g] | 206,4 | 152,71 | 154,83 | 154,83 |
| Stabilisator 1 [g] | 21,5 | 16,1 | | 16,1 |
| Katalysator 1 [ppm] | | 20 | 30 | 20 |
| Kennzahl | 1000 | 1000 | 990 | 990 |

**Tabelle 4: Beispiele zu Eigenschaften:**

| | Beispiel 5 | Beispiel 6 | Beispiel 7 | Beispiel 8 |
|---|---|---|---|---|
| Shore D | 56 | 55 | | 54 |
| E-Modul [MPa] | | 66 | | 63 |
| Zugfestigkeit [MPa] | 42 | 49 | | 56 |
| Reißdehnung [%] | 460 | 510 | | 530 |
| Weiterreißwiderstand [kN/m] | 131 | 119 | | 123 |
| Druckverformungsrest (72h/23°C/30min) [%] | 27 | 26 | | 26 |
| Druckverformungsrest (24h/70°C/30min) [%] | 44 | 42 | | 42 |
| Druckverformungsrest (24h/100°C/30min) [%] | 55 | 65 | | 75 |
| Abrieb [mm³] | 34 | 33 | | 38 |
| Schlauchoptik | Transluzent | Transparent | Transparent | Transparent |
| Berstdruck ungetemperter 5,8 * 8,2 mm Schläuche bei 23 °C [bar] | 35,7 | 33,1 | 32,9 | 32,2 |
| Berstdruck ungetemperter 5,8 * 8,2 mm Schläuche bei 70 °C [bar] | | 21,5 | 21,3 | 21,2 |
| Berstdruck getemperter 5,8 * 8,2 mm Schläuche bei 23 °C [bar] | 39,6 | 37,7 | 36,8 | 35 |
| Berstdruck getemperter 5,8 * 8,2 mm Schläuche bei 70 °C [bar] | | 24,0 | 25,3 | 22,4 |
| Berstdruck ungetemperter 5,8 * 8,2 mm Schläuche bei 60 °C [bar] | 21,5 | | | |
| Berstdruck getemperter 5,8 * 8,2 mm Schläuche bei 60 °C [bar] | 26,3 | | | |
| Berstdruck ungetemperter 5,8 * 8,2 mm Schläuche bei 80 °C [bar] | 18,5 | | | |
| Berstdruck getemperter 5,8 * 8,2 mm Schläuche bei 80 °C [bar] | 22,6 | | | |
| TMA Onset Temperatur (ΔT 20 °C/Min) [°C] | | 199 | | 197 |
| Kriechverhalten [%] | 5,9 | 4,0 - 4,9 | | |

Die in Tabelle 4 angegebene TMA Onset Temperatur dient als Maß für die Wärmeformbeständigkeit. Die TMA wurde mit einer Heizrate von 20 °C/Min gemessen. Es wurde die Onset Temperatur angegeben.

### 2. Herstellbeispiel II

Folgende Einsatzstoffe wurden eingesetzt:
- Polyol 1:: Polyetherpolyol mit einer OH- Zahl von 112,2 und ausschließlich primären OH- Gruppen (basierend auf Tetramethylenoxid, Funktionalität: 2)
- Polyol 2:: Polyesterpolyol mit einer OH- Zahl von 56 und ausschließlich primären OH- Gruppen (basierend auf Hexandiol, Butandiol, Adipinsäure, Funktionalität: 2)
- Isocyanat 1:: aromatisches Isocyanat (4,4' Methylendiphenyldiisocyanat)
- KV 1:: 1,3- Propandiol
- KV 2:: 1,4- Butandiol
- Katalysator 1:: Zinn-II-isooctoat (50 %ig in Dioktyladipat)
- Stabilisator 1:: Sterisch gehindertes Phenol

Die unter Verwendung von 1,4-Butandiol als Kettenverlängerer hergestellten Produkte dienen als Vergleichsbeispiele.

**Tabelle 5: Beispiele zu Synthese:**

| | Beispiel 9* | Beispiel 10* | Beispiel 11 (entspricht Beispiel 8) |
|---|---|---|---|
| Polyol 1 [g] | | 750 | 750 |
| Polyol 2 [g] | 750 | | |
| Isocyanat 1 [g] | 585 | 690 | 690 |
| KV 1 [g] | | | 154,83 |
| KV 2 [g] | 175,76 | 180,84 | |
| Stabilisator 1 [g] | | | 16,1 |
| Katalysator 1 [ppm] | 20 | 20 | 20 |
| Kennzahl | 990 | 990 | 990 |

| | | | |
|---|---|---|---|
| * Vergleichsbeispiel | | | |

**Tabelle 6: Beispiele zu Eigenschaften:**

| | Beispiel 9* | Beispiel 10* | Beispiel 11 (entspricht Beispiel 8) |
|---|---|---|---|
| Shore D | 51 | 56 | 54 |
| E-Modul [MPa] | 123 | 77 | 63 |
| Zugfestigkeit [MPa] | 52 | 53 | 56 |
| Reißdehnung [%] | 530 | 510 | 530 |
| Weiterreißwiderstand [kN/m] | 133 | 127 | 123 |
| Druckverformungsrest (72h/23°C/30min) [%] | | | 26 |
| Druckverformungsrest (24h/70°C/30min) [%] | | | 42 |
| Druckverformungsrest (24h/100°C/30min) [%] | | | 75 |
| Abrieb [mm³] | 40 | 35 | 38 |
| Berstdruck ungetemperter 5,8 * 8,2 mm Schläuche bei 23 °C [bar] | 32,4 | 27,1 | 32,2 |
| Berstdruck ungetemperter 5,8 * 8,2 mm Schläuche bei 70 °C [bar] | 20,3 | 12,6 | 21,2 |
| Berstdruck getemperter 5,8 * 8,2 mm Schläuche bei 23 °C [bar] | 33,4 | 27,7 | 35 |
| Berstdruck getemperter 5,8 * 8,2 mm Schläuche bei 70 °C [bar] | 21,5 | 17,5 | 22,4 |
| Berstverhalten ungetempert 23 °C | Punktuell | Bläht vor dem Bersten auf | Punktuell |
| Berstverhalten ungetempert 70 °C | Punktuell | | Punktuell |

| Transparenz (visuell) | Transluzent bis Opak | Transparent | Transparent |
|---|---|---|---|
| Hydrolysebeständigkeit (in Wasser) | ≥ 56 Tage (80 °C) | ≥ 200 Tage (85 °C) | ≥ 200 Tage (85 °C) |
| TMA Onset Temperatur (ΔT 20 °C/Min) [°C] | | 177 | 197 |
| Kriechverhalten [%] | 7,4-8,8 | 6,9-8,9 | |

| | | | |
|---|---|---|---|
| * Vergleichsbeispiel | | | |

Das Kriechverhalten wurde bestimmt, indem ein getemperter (20 h/100 °C) S1 Zugstab um 5 % gedehnt wurde. Die Kraft bzw. Spannung, die bei dieser Dehnung erstmalig auftritt, wird 12 Stunden bei Raumtemperatur gehalten. Nach Entspannung wird der Längenunterschied bestimmt. Die angegebenen Werte spiegeln die Streuung bei den durchgeführten Wiederholungen der Messung wieder.

### 3. Herstellbeispiel III

Folgende Einsatzstoffe wurden eingesetzt:
- Polyol 3:: Polyesterpolyol mit einer OH- Zahl von 56 und ausschließlich primären OH- Gruppen (basierend auf Adipinsäure, Butandiol und Monoethylenglykol, Funktionalität: 2)
- Polyol 4:: Polyesterpolyol mit einer OH- Zahl von 52 und ausschließlich primären OH- Gruppen (basierend auf Adipinsäure und Monoethylenglykol, Funktionalität: 2)
- Isocyanat 2 (=Isocyanat 1):: aromatisches Isocyanat (4,4' Methylendiphenyldiisocyanat)
- KV 1:: 1,3- Propandiol
- KV 2:: 1,4- Butandiol
- Katalysator 2:: Zinn-II-isooctoat (50 %ig in Dioktyladipat)
- Stabilisator 2:: Sterisch gehindertes Phenol

### 3.1 Beispiel für diskontinuierliche Synthese:

Ein thermoplastische Polyurethan (TPU) wurde aus 4,4'-Diphenylmethandiisocyanat, Kettenverlängerer 1,3-Propandiol, phenolischen Antioxidanz, und einem Polyadipinsäureesterdiol mit einer OH- Zahl von 56 unter Rühren in einem Reaktionsgefäß synthetisiert. Nach Erreichen einer Reaktionstemperatur von 110 °C wurde die Lösung auf eine temperierte Heizplatte ausgegossen und die erhaltende TPU-Platte nach Temperung granuliert. Die Messwerte wurden von Spritzgussplatten bzw. von Schläuchen erstellt, wobei die Zonentemperaturen der verwendeten Extruder zwischen 190 °C und 235 °C lagen.

Die Synthese und Eigenschaften von erhaltenen thermoplastischen Polyurethanen sind in Tabelle 7 und 8 zusammengefasst.

**Tabelle 7: Beispiele zu Synthese:**

| | Beispiel 12* | Beispiel 13* | Beispiel 14* | Beispiel 15* |
|---|---|---|---|---|
| Polyol 3 [g] | 700 | 700 | | |
| Polyol 4 [g] | | | 750 | 750 |
| Isocyanat 2 [g] | 653,3 | 630 | 600 | 600 |
| KV 1 [g] | 172,1 | | 151,9 | |
| KV 2 [g] | | 195,4 | | 179,9 |
| Stabilisator 2 [g] | | | 18,75 | 18,75 |
| Kennzahl | 1000 | 1000 | 1000 | 1000 |

| | | | | |
|---|---|---|---|---|
| * Vergleichsbeispiel | | | | |

**Tabelle 8: Beispiele zu Eigenschaften:**

| | Beispiel 12* | Beispiel 13* | Beispiel 14* | Beispiel 15* |
|---|---|---|---|---|
| Shore D | 56 | 56 | | |
| Zugfestigkeit [MPa] | 58 | 40 | | |
| Reißdehnung [%] | 470 | 520 | | |
| Weiterreißwiderstand [kN/m] | 127 | 131 | | |
| Druckverformungsrest (72h/23°C/30min) [%] | 24 | 25 | | |
| Druckverformungsrest (24h/70°C/30min) [%] | 67 | 76 | | |
| Druckverformungsrest (24h/100°C/30min) [%] | 46 | 49 | | |
| Abrieb [mm³] | 29 | 33 | | |
| Berstdruck ungetemperter 5,8 * 8,2 mm Schläuche bei 23 °C [bar] | 30,1 | 37,1 | 39,2 | 39,2 |
| Berstdruck ungetemperter 5,8 * 8,2 mm Schläuche bei 70 °C [bar] | 14,6 | 20,6 | 22,1 | 20,8 |
| Berstdruck getemperter 5,8 * 8,2 mm Schläuche bei 23 °C [bar] | 37,7 | 41,8 | 40,2 | 37,3 |
| Berstdruck getemperter 5,8 * 8,2 mm Schläuche bei 70 °C [bar] | 21,5 | 30,8 | 23,2 | 25,0 |

| | | | | |
|---|---|---|---|---|
| * Vergleichsbeispiel | | | | |

### 3.2 Beispiel für kontinuierliche Synthese

### 3.2.1 Bandverfahren:

Eine Mischung aus Kettenverlängerer 1,3-Propandiol, eines phenolischen Antioxidanz, und einem Polyadipinsäureesterdiol mit einer OH- Zahl von 56 wurde auf 80 °C erwärmt und in einem Mischkopf mit 4,4'-Diphenylmethandiisocyanat intensiv gemischt.

Das erhaltene Reaktionsgemisch wurde mit einer Temperatur von 95 °C auf ein umlaufendes PTFE-Band aufgebracht. Die am Ende des Bandes zu einer festen Bandware (Schwarte) erstarrte Reaktionsmischung wurde mit ca. 80 °C über Einzugswalzen kontinuierlich direkt einer Zerkleinerungs- und Homogenisierungsvorrichtung zugeführt. Dort wurde es bei Temperaturen von ca. 105 °C zerkleinert und in einen tangentialen angeflanschten Einwellenextruder gefördert. Die Gehäusetemperaturen lagen im Einzugsbereich bei etwa 170 °C bis 190 °C, in der Mittelzone bei 190 bis 220 °C. Die an der Düsenplatte austretenden Schmelze wurde mit einer Unterwassergranulierung zu gleichmäßigem Linsengranulat konfektioniert und anschließend getrocknet.

### 3.2.2 Reaktionsextrusionsverfahren:

In das erste Gehäuse eines Zweiwellenextruders Typ ZSK 92 der Firma Werner & Pfleiderer, Stuttgart mit einer Verfahrenslänge von 56 D wurde eine Mischung aus dem Kettenverlängerer 1,3-Propandiol, eines phenolischen Antioxidanz und einem Polyadipinsäureesterdiol mit einer OH- Zahl von 56 und eines Katalysators mit einer Vorlagetemperatur von 150 °C einerseits sowie getrennt hiervon das 4,4'-Diphenylmethandiisocyanat mit einer Vorlagetemperatur von 65 °C in das erste Gehäuse desselben dosiert. Die Drehzahl der Doppelschnecke betrug 280 min⁻¹. Die Temperatureinstellwerte der Gehäuse lagen in Stromabrichtung im ersten Schneckendrittel bei 200 °C, im zweiten Schneckendrittel bei 170 °C und im dritten und letzten Schneckendrittel bei 190 °C. Der Ausstoß betrug 850 kg/h. Nach dem Schmelzeabschlag durch Unterwassergranulierung und integrierter zentrifugaler Trocknung wurde das Granulat bei ca. 80 bis 90 °C endgetrocknet.

Das Granulat wurde anschließend durch Spritzgießen zu Prüfkörpern bzw. durch Extrusion zu Schläuchen weiterverarbeitet. Die Schläuche wurden durch Extrusion auf einem 45er Arenz Extruder mit 3-Zonenschnecke mit 9.8 mm Düse und einem Dorn von 6,9 mm gefahren. Die Zonentemperaturen lagen zwischen 180 und 225 °C. Die Einstellung der Schlauchgeometrie erfolgte durch Variation der Abzugsgeschwindigkeit und Drucks im Wasserbad mit Vakuumkalibrierung.

Die Synthese und Eigenschaften von thermoplastischen Polyurethanen, die durch kontinuierliche Synthese hergestellt wurden, sind in Tabelle 9 und Tabelle 10 zusammengefasst.

**Tabelle 9: Beispiele zu Synthese:**

| | Beispiel 16* | Beispiel 17* | Beispiel 18* | Beispiel 19* |
|---|---|---|---|---|
| Polyol 2 [g] | 1000 | 1000 | 1000 | 1000 |
| Isocyanat 2 [g] | 787,3 | 780 | 806,5 | 780 |
| KV 1 [g] | 203,9 | | 206,1 | |
| KV 2 [g] | | 238,2 | | 233,91 |
| Stabilisator 2 [g] | 8 | 8 | 8 | 8 |
| Katalysator 2 [ppm] | 0,5 | 0,5 | 0,5 | 0,5 |
| Kennzahl | 985 | 985 | 1000 | 1000 |

| | | | | |
|---|---|---|---|---|
| * Vergleichsbeispiel | | | | |

**Tabelle 10: Beispiele zu Eigenschaften:**

| | Beispiel 16* | Beispiel 17* | Beispiel 18* | Beispiel 19* |
|---|---|---|---|---|
| Berstdruck ungetemperter 5,8 * 8,2 mm Schläuche bei 23 °C [bar] | 33,4 | 31,2 | 36,5 | 30,9 |
| Berstdruck ungetemperter 5,8 * 8,2 mm Schläuche bei 70 °C [bar] | 18,4 | 15,9 | 20,3 | 15,9 |
| Berstdruck getemperter 5,8 * 8,2 mm Schläuche bei 23 °C [bar] | 36,0 | 35,7 | 37,1 | 35,3 |
| Berstdruck getemperter 5,8 * 8,2 mm Schläuche bei 70 °C [bar] | 22,7 | 21,1 | 25,2 | 21,0 |

| | | | | |
|---|---|---|---|---|
| * Vergleichsbeispiel | | | | |

### 4. Messmethoden:

Für die Materialcharakterisierung können u.a. folgende Messmethoden genutzt werden: DSC, DMA, TMA, NMR, FT-IR, GPC, Berstdruckmessung
- Härte: DIN 53 505,
- Zugfestigkeit: DIN 53 504,
- Reißdehnung: DIN 53504,
- Weiterreißfestigkeit: DIN 53 515,
- Abrieb: DIN 53 516

## Patentansprüche

1. Thermoplastisches Polyurethan erhältlich oder erhalten durch Umsetzung von mindestens den Komponenten (i) bis (iii):
(i) ein Polyisocyanatzusammensetzung;
(ii) 1,3-Propandiol als Kettenverlängerer;
(iii) eine Polyolzusammensetzung,
wobei neben 1,3-Propandiol kein weiterer Kettenverlängerer eingesetzt wird, und
wobei die Polyolzusammensetzung mindestens Polytetrahydrofuran enthält, und die Polyisocyanatzusammensetzung mindestens Methylendiphenyldiisocyanat (MDI) enthält,
wobei das Polytetrahydrofuran ein Molekulargewicht Mn im Bereich von 650 g/mol bis 1400 g/mol aufweist.

2. Thermoplastisches Polyurethan gemäß Anspruch 1, wobei das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt.

3. Thermoplastisches Polyurethan gemäß einem der Ansprüche 1 oder 2, wobei die Kennzahl bei der Umsetzung im Bereich von 965 bis 1100 liegt.

4. Thermoplastisches Polyurethan gemäß einem der Ansprüche 1 bis 3, wobei das thermoplastische Polyurethan eine Shore Härte im Bereich von 60 A bis 80 D aufweist, bestimmt gemäß DIN 53505.

5. Thermoplastisches Polyurethan gemäß einem der Ansprüche 1 bis 4, wobei das thermoplastische Polyurethan transluzent bis transparent ist.

6. Thermoplastisches Polyurethan gemäß einem der Ansprüche 1 bis 4, wobei das thermoplastische Polyurethan opak ist.

7. Thermoplastisches Polyurethan gemäß einem der Ansprüche 1 bis 6, wobei das thermoplastische Polyurethan mindestens ein Additiv enthält.

8. Verfahren zur Herstellung eines thermoplastischen Polyurethans, umfassend die Umsetzung der Komponenten (i) bis (iii):
(i) einer Polyisocyanatzusammensetzung;
(ii) 1,3-Propandiol als Kettenverlängerer;
(iii) einer Polyolzusammensetzung,
wobei neben 1,3-Propandiol kein weiterer Kettenverlängerer eingesetzt wird, und
wobei die Polyolzusammensetzung mindestens Polytetrahydrofuran enthält, und die Polyisocyanatzusammensetzung mindestens Methylendiphenyldiisocyanat (MDI) enthält,
wobei das Polytetrahydrofuran ein Molekulargewicht Mn im Bereich von 650 g/mol bis 1400 g/mol aufweist.

9. Verwendung eines thermoplastischen Polyurethans gemäß einem der Ansprüche 1 bis 7 oder eines thermoplastischen Polyurethans erhältlich oder erhalten nach einem Verfahren gemäß Anspruch 8 zur Herstellung von Spritzgussprodukten, Extrusionsprodukten, Folien und Formkörpern.

10. Verwendung gemäß Anspruch 9, wobei der Formkörper ein Schlauch ist.

11. Schlauch, umfassend ein thermoplastischen Polyurethans gemäß einer der Ausführungsformen 1 bis 7 oder ein thermoplastisches Polyurethan erhältlich oder erhalten nach einem Verfahren gemäß Anspruch 8.

12. Schlauch gemäß Anspruch 11, wobei der Schlauch mehrlagig aufgebaut ist.

13. Schlauch gemäß Anspruch 11 oder 12, wobei der Schlauch durch Fasern oder Geweben verstärkt ist.

14. Schlauch gemäß einem der Ansprüche 11 bis 13, wobei der Schlauch einer Nachbehandlung unterzogen wurde.

## Claims

1. A thermoplastic polyurethane obtainable or obtained by conversion of at least components (i) to (iii):
(i) a polyisocyanate composition;
(ii) propane-1,3-diol as chain extender;
(iii) a polyol composition,
wherein no further chain extender is used aside from propane-1,3-diol and
wherein the polyol composition comprises at least polytetrahydrofuran, and the polyisocyanate composition comprises at least methylene diphenyl diisocyanate (MDI),
wherein the polytetrahydrofuran has a molecular weight Mn in the range from 650 g/mol to 1400 g/mol.

2. The thermoplastic polyurethane according to claim 1, wherein the molar ratio of the sum total of the functionalities of the polyol composition and chain extenders used to the sum total of the functionalities of the isocyanate composition used is in the range from 1:0.8 to 1:1.3.

3. The thermoplastic polyurethane according to either of claims 1 and 2, wherein the index in the reaction is in the range from 965 to 1100.

4. The thermoplastic polyurethane according to any of claims 1 to 3, wherein the thermoplastic polyurethane has a Shore hardness in the range from 60 A to 80 D, determined according to DIN 53505.

5. The thermoplastic polyurethane according to any of claims 1 to 4, wherein the thermoplastic polyurethane is translucent to transparent.

6. The thermoplastic polyurethane according to any of claims 1 to 4, wherein the thermoplastic polyurethane is opaque.

7. The thermoplastic polyurethane according to any of claims 1 to 6, wherein the thermoplastic polyurethane comprises at least one additive.

8. A process for preparing a thermoplastic polyurethane, comprising the conversion of components (i) to (iii):
(i) a polyisocyanate composition;
(ii) propane-1,3-diol as chain extender;
(iii) a polyol composition,
wherein no further chain extender is used aside from propane-1,3-diol and
wherein the polyol composition comprises at least polytetrahydrofuran, and the polyisocyanate composition comprises at least methylene diphenyl diisocyanate (MDI),
wherein the polytetrahydrofuran has a molecular weight Mn in the range from 650 g/mol to 1400 g/mol.

9. The use of a thermoplastic polyurethane according to any of claims 1 to 7 or of a thermoplastic polyurethane obtainable or obtained by a process according to claim 8 for production of injection molded products, extrusion products, films and shaped bodies.

10. The use according to claim 9, wherein the shaped body is a hose.

11. A hose comprising a thermoplastic polyurethane according to any of embodiments 1 to 7 or a thermoplastic polyurethane obtainable or obtained by a process according to claim 8.

12. The hose according to claim 11, wherein the hose has a multilayer structure.

13. The hose according to claim 11 or 12, wherein the hose has been reinforced by fibers or weaves.

14. The hose according to any of claims 11 to 13, wherein the hose has been subjected to an aftertreatment.

## Revendications

1. Polyuréthane thermoplastique pouvant être obtenu ou obtenu par transformation d'au moins les composants (i) à (iii) :
(i) une composition de polyisocyanate ;
(ii) du 1,3-propanediol en tant qu'agent d'extension de chaînes ;
(iii) une composition de polyol,
aucun autre agent d'extension de chaînes n'étant utilisé outre le 1,3-propanediol, et
la composition de polyol contenant au moins un polytétrahydrofuranne, et la composition de polyisocyanate contenant au moins du diisocyanate de diphénylméthylène (MDI),
le polytétrahydrofuranne présentant un poids moléculaire Mn dans la plage de 650 g/mole à 1 400 g/mole.

2. Polyuréthane thermoplastique selon la revendication 1, le rapport molaire de la somme des fonctionnalités de la composition de polyol et de l'agent d'extension de chaînes utilisés sur la somme des fonctionnalités de la composition d'isocyanate utilisée se situant dans la plage de 1 sur 0,8 à 1 sur 1,3.

3. Polyuréthane thermoplastique selon l'une quelconque des revendications 1 et 2, l'indice lors de la transformation se situant dans la plage de 965 à 1 100.

4. Polyuréthane thermoplastique selon l'une quelconque des revendications 1 à 3, le polyuréthane thermoplastique présentant une dureté Shore dans la plage de 60 A à 80 D, déterminée selon la norme DIN 53505.

5. Polyuréthane thermoplastique selon l'une quelconque des revendications 1 à 4, le polyuréthane thermoplastique étant translucide à transparent.

6. Polyuréthane thermoplastique selon l'une quelconque des revendications 1 à 4, le polyuréthane thermoplastique étant opaque.

7. Polyuréthane thermoplastique selon l'une quelconque des revendications 1 à 6, le polyuréthane thermoplastique contenant au moins un additif.

8. Procédé pour la préparation d'un polyuréthane thermoplastique, comprenant la transformation des composants (i) à (iii) :
(i) une composition de polyisocyanate ;
(ii) du 1,3-propanediol en tant qu'agent d'extension de chaînes ;
(iii) une composition de polyol,
aucun autre agent d'extension de chaînes n'étant utilisé outre le 1,3-propanediol, et
la composition de polyol contenant au moins un polytétrahydrofuranne, et la composition de polyisocyanate contenant au moins du diisocyanate de diphénylméthylène (MDI),
le polytétrahydrofuranne présentant un poids moléculaire Mn dans la plage de 650 g/mole à 1 400 g/mole.

9. Utilisation d'un polyuréthane thermoplastique selon l'une quelconque des revendications 1 à 7 ou d'un polyuréthane thermoplastique pouvant être obtenu ou obtenu par un procédé selon la revendication 8 pour la préparation de produits moulés par injection, de produits d'extrusion, de feuilles et de corps moulés.

10. Utilisation selon la revendication 9, le corps moulé étant un tuyau.

11. Tuyau, comprenant un polyuréthane thermoplastique selon l'une des formes d'exécution 1 à 7 ou un polyuréthane thermoplastique pouvant être obtenu ou obtenu par un procédé selon la revendication 8.

12. Tuyau selon la revendication 11, le tuyau étant construit de manière multicouche.

13. Tuyau selon la revendication 11 ou 12, le tuyau étant renforcé par des fibres ou des tissus.

14. Tuyau selon l'une quelconque des revendications 11 à 13, le tuyau ayant été soumis à un post-traitement.
